# EUROPEAN PATENT APPLICATION

(11) **EP 4 435 065 A1**
(43) Date of publication of application: **25.09.2024**
(21) Application number: 23162771.2
(22) Date of filing: 20.03.2023
(51) Int. Cl.: C09D 11/102, C09D 11/104, C09D 11/107, C09D 11/52

(54) **CONDUCTIVE POLYMER DISPERSION**

(71) Applicant: AGFA-GEVAERT NV, 2640 Mortsel (BE)
(72) Inventor: VAN AERT, Hubertus, 2640 Mortsel (BE); HERCKENS, Roald, 2640 Mortsel (BE); MUYS, Bavo, 2640 Mortsel (BE)
(74) Representative: Viaene, Kris

(57) **Abstract**

A conductive polymer composition comprising:
- a conductive polymer, and
- a polymer binder,
characterized in that the polymer binder includes an aqueous dispersion of a Polymer Mixture comprising a First Polymer that is aqueous dispersible and a Second Polymer that is aqueous insoluble.

## Description

### Technical field of the invention

The present invention relates to conductive polymer dispersions and to conductive polymer formulations prepared therefrom. In particular the invention related to conductive polymer formulations used to prepare conductive coating solution and/or printing inks for various substrates. The invention also related to a method of preparing such conductive polymer dispersions and/or formulations.

### Background art for the invention

Well known and widely used conductive polymer coating solutions and/or printing inks are poly(3,4-ethylenedioxythiophene)/polystyrene sulfonic acid (PEDOT/PSS) based.

In many applications the adhesion of these PEDOT/PSS based coatings or printing inks on various substrates, while maintaining a sufficiently high conductivity (or low surface resistivity), is not sufficient.

A so-called binder is often added to the coating solution or printing ink to improve the adhesion towards a substrate. Such a binder typically includes polymers that are compatible with the dispersion medium of the PEDOT/PSS coating solutions or printing inks. As PEDOT/PSS based coating solutions or printing inks are preferably prepared from aqueous PEDOT/PSS dispersions, the binder polymers are in such case water-compatible polymers.

WO2002/079316 (AGFA GEVAERT NV) discloses an aqueous PEDOT/PSS composition comprising a non-newtonian binder. The non-newtonian binder includes for example a homo- or co-polymer of acrylic acid crosslinked with a polyalkenyl polyether.

WO2003/000765 (AGFA GEVAERT NV) discloses an aqueous PEDOT/PSS flexographic printing ink comprising a latex binder. Suitable latex binders include for example a carboxylated polyolefin or a homo- or copolymer of a monomer selected from the group consisting of styrene, (meth)acrylates and dienes.

US6358437 (HEREAUS) discloses an aqueous PEDOT/PSS screen printing ink. The ink includes a water-soluble or water-dispersible polymer as binder, in particular partially sulphonated polymers to improve their water-compatibility.

JP2010/265450 (DAINIPPON INK&CHEMICALS) discloses an aqueous screen printing ink comprising PEDOT/PSS, a water-soluble resin and a solvent. The water-soluble resin is preferably a cellulose resin.

Water-compatible polymers referred to herein encompass both water-soluble and water-dispersible polymers. When water-soluble polymers are used as binder in the conductive polymer dispersion/formulation, a worsening of the water resistance of a coating or print prepared from the dispersion/formulation may be expected. In contrast, water-dispersible polymers have in most cases less influence on the water-resistance of the coating.

Water-compatible polymers are often prepared by combining water-compatible co-monomers or polymer segments with water-insoluble co-monomers or polymer segments. To obtain well-defined submicron dispersions the polymers preferably include a sufficient amount of water-compatible co-monomers or polymer segments, or alternatively the dispersion includes a sufficient amount of surfactants or stabilizers. The presence of such water-compatible co-monomers or polymer segments often improves the adhesion towards various plastic substrates. However, in most cases it also reduces the water resistance of the coating.

There is a need for conductive polymer compositions, which do not contain high boiling solvents and wherewith coatings having a sufficient water resistance, surface resistance and adhesion towards various substrates may be prepared.

### Summary of the invention

It is an object of the invention to provide a conductive polymer composition, which does not contain high boiling solvents and wherewith coatings or prints having a sufficient water resistance, surface resistance and adhesion towards various substrates may be prepared.

The object of the invention is realized by the conductive polymer composition as defined in claim 1.

Further objects of the invention will become apparent from the description hereinafter.

### Detailed description of the invention

### Definitions

The term "monofunctional" in e.g. monofunctional polymerizable compound means that the polymerizable compound includes one polymerizable group.

The term "difunctional" in e.g. difunctional polymerizable compound means that the polymerizable compound includes two polymerizable groups.

The term "polyfunctional" in e.g. polyfunctional polymerizable compound means that the polymerizable compound includes more than two polymerizable groups.

The term "alkyl" means all variants possible for each number of carbon atoms in the alkyl group i.e. methyl, ethyl, for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl, etc.

Unless otherwise specified a substituted or unsubstituted alkyl group is preferably a C₁ to C₆-alkyl group.

Unless otherwise specified a substituted or unsubstituted alkenyl group is preferably a C₂ to C₆-alkenyl group.

Unless otherwise specified a substituted or unsubstituted alkynyl group is preferably a C₂ to C₆-alkynyl group.

Unless otherwise specified a substituted or unsubstituted alkaryl group is preferably a phenyl or naphthyl group including one, two, three or more C₁ to C₆-alkyl groups.

Unless otherwise specified a substituted or unsubstituted aralkyl group is preferably a C₇ to C₂₀-alkyl group including a phenyl group or naphthyl group.

Unless otherwise specified a substituted or unsubstituted aryl group is preferably a phenyl group or naphthyl group.

Unless otherwise specified a substituted or unsubstituted heteroaryl group is preferably a five- or six-membered ring substituted by one, two or three oxygen atoms, nitrogen atoms, sulphur atoms, selenium atoms or combinations thereof.

Unless otherwise specified a substituted or unsubstituted alkylene group is preferably a C₁ to C₆-alkylene group.

The term "substituted", in e.g. substituted alkyl group means that the alkyl group may be substituted by other atoms than the atoms normally present in such a group, i.e. carbon and hydrogen. For example, a substituted alkyl group may include a halogen atom or a thiol group. An unsubstituted alkyl group contains only carbon and hydrogen atoms.

Unless otherwise specified a substituted alkyl group, a substituted alkenyl group, a substituted alkynyl group, a substituted aralkyl group, a substituted alkaryl group, a substituted aryl and a substituted heteroaryl group are preferably substituted by one or more constituents selected from the group consisting of methyl, ethyl, n-propyl, isopropyl, n-butyl, isobutyl and tertiary-butyl, ester, amide, amine, ether, thioether, ketone, aldehyde, sulfoxide, sulfone, sulfonate ester, sulphonamide, -Cl, -Br, -I, -OH, -SH, -CN and -NO₂.

### Conductive polymer composition

The conductive polymer composition according to the present invention comprises:
- a conductive polymer, and
- a polymer binder,
characterized in that the polymer binder includes an aqueous dispersion Polymer Mixture comprising a First Polymer that is aqueous dispersible and a Second Polymer that is aqueous insoluble.

A composition comprising a conductive polymer is referred to herein as a conductive polymer composition.

A polymer binder referred to herein is a binder including one or more polymers. A binder is typically added to a composition to optimize its film forming or printing properties and to optimize the mechanical properties of a coating or a pattern of the composition on a substrate.

The aqueous dispersible Polymer Mixture combines the properties of an aqueous dispersible polymer (First Polymer) and an aqueous insoluble polymer (Second Polymer) as described below. In this way, properties of an aqueous insoluble polymer may be introduced in an aqueous dispersion.

There are two preferred methods to prepare the Polymer Mixture.

In a first method, the Second Polymer dissolved in an organic solvent is added to an aqueous dispersion of the First Polymer followed by the evaporation of the organic solvent.

In a second method the Second Polymer dissolved in an organic solvent is added to the First Polymer, which is also dissolved in an organic solvent. Both organic solvents may be different from each other or may be the same. Then, water is added to the organic solution comprising the First and Second Polymer followed by the evaporation of the organic solvent(s).

Both methods result in the Polymer Mixture according to the present invention. This Polymer Mixture may be a homogeneous or a heterogenous mixture. If the First and Second Polymer are not completely miscible or the organic solvent wherein the Second Polymer is dissolved does not allow a complete swelling of the First Polymer then the Polymer Mixture dispersion may reveal an intra particle phase separation, such as for example a core-shell morphology. If the First Polymer and the Second Polymer are miscible and the organic solvent(s) used is a good solvent for both polymers, then the Polymer Mixture dispersion may be a homogeneous interpenetration network of both the First and the Second Polymers.

The first method is preferred when it is important to have particle size control of the Polymer Mixture dispersion. The second method is preferred when using water dispersible polymers which are commercialized as solid product or as a solution in an organic solvent. With the second method it is also easier to obtain a homogeneous Polymer Mixture.

Examples of aqueous-dispersible polymers are polyurethanes, polyesters and polyacrylates.

The manufacture of polyurethane dispersions providing sufficient chemical resistance and mechanical performance typically involves the use of aprotic solvents, like N-methyl-pyrrolidone (NMP) or N-ethyl-pyrrolidone (NEP). However, due to their high boiling points, solvents like NMP and NEP are difficult to remove from the dispersions and from coatings including such dispersions. The presence of these solvents may have a negative influence on the properties of the coating, such as a loss in adhesion, cohesion, rub resistance and scratch resistance. In addition, solvents like NMP are not preferred in a manufacturing environment for toxicity reasons. To obtain good film formation without the necessity to use such aprotic, typically high boiling, solvents, a higher amount of dispersing co-monomers, such as dimethylol propionic acid or polyethylene glycol functional diols, such as Ymer^{™} N120 or Ymer^{™} N90, may be used. While the presence of a higher amount of such hydrophilic co-monomers does makes the presence of aprotic solvents as coalescing or softening agent unnecessary, it reduces the water resistance. To compensate for the reduced water resistance a water insoluble Second Polymer can be added to obtain a Polymer Mixture according to the present invention.

Polyester dispersions are typically prepared by polycondensation of dicarboxylic acids, dicarboxylic acid methyl esters or dicarboxylic acid activated esters with diols or by ring opening polymerization of lactones. Hydrophilic co-monomers, such as sulfoisophthalic acid or its corresponding sodium salt, are typically incorporated to obtain a co-polyester that is water-dispersible. A high amount of such hydrophilic co-monomers are necessary to obtain stable aqueous dispersions. However, such a high amount of hydrophilic co-monomers may again reduce the water resistance of such polyester co-polymers. Furthermore, in case semi-crystalline polyesters are modified with hydrophilic co-monomers, the crystallinity is often reduced. To compensate for the reduction of these physical properties a water insoluble Second Polymer can be added to obtain a Polymer Mixture according to the present invention.

Acrylic dispersions are typically prepared by traditional emulsion polymerization. The nucleation of the polymerization is usually established via micellar or homogeneous nucleation. During polymerization the particle size of the acrylic dispersion increases while the monomer, present in monomer droplets, is depleted. To have an efficient emulsion polymerization, the monomers should have a limited water solubility to enable their transport from the monomer droplets towards the polymerization loci. Therefore, hydrophobic and water-insoluble monomers are difficult to be polymerized via traditional emulsion polymerization techniques or only low quantities of such monomers may be incorporated. Examples of hydrophobic monomers are stearyl (meth)acrylate, behenyl methacrylate, hexadecyl acrylate, 9-vinylfluorene, N-vinylcarbazole, N-allylcarbazole, 9-vinyl-anthracene, 1-vinylnaphthalene and 2-vinyl naphthalene. Whereas it is often interesting to implement hydrophobic monomers and when this is not possible to achieve this via emulsion copolymerization, such monomers may be introduced via a water insoluble Second Polymer to obtain a Polymer Mixture according to the present invention.

Also, UV stabilizers like 2-(2'-hydroxy-5'-methacryloxyethylphenyl)-2H-benzotriazole [RUVA-93, CAS registry number 96478-09-0] may be implemented by emulsion polymerization. But also in this case, it may be difficult to incorporate high amounts of such monomers. The technique of adding a water insoluble Second Polymer can solve this problem, since then a higher content of UV absorber can be reached.

Polyacrylic dispersions may also be prepared via mini-emulsion polymerization, which allows using hydrophobic monomers, in particular when the monomer droplet is converted to a polymer particle. However, mini-emulsion polymerization is not possible for all kind of monomers and particle size control is more difficult. Also for polyacrylic dispersions prepared via mini-emulsion polymerization the addition of a water insoluble Second Polymer could broaden the scope of polymer properties which can be covered using these polyacrylic dispersions. Furthermore the Second Polymer may not only be added after the polyacrylic dispersion preparation but also during the preparation by dissolving the water insoluble Second Polymer in the acrylic monomer that is used in the mini-emulsion.

For polyacrylate dispersions prepared via both traditional emulsion polymerization or mini-emulsion, particle size control is more difficult when bulky water-insoluble monomers are used. Addition of these monomers implemented in a water-insoluble Second Polymer can be a solution for this problem. One can then do the emulsion polymerization only with monomers like methyl methacrylate and/or styrene, which allow a very good particle size control.

The median particle size (d50) particles of the aqueous dispersible polymer mixture referred to above is preferably from 10 to 2000 nm, more preferably from 20 to 1000 nm, most preferably from 30 to 500 nm.

The aqueous conductive composition may in addition to the polymer binder described above contain one or more other polymer binders. Such additional binders are preferably aqueous dispersible or soluble polymers and may selected from the group of polymers or co-polymers comprising hydroxyl groups, carboxylic groups, sulphonic acid groups, phosphonic acid groups, or salts thereof, or oligo ethylene glycol based polymers or co-polymers.

### Polymer Mixture

The aqueous dispersible Polymer Mixture referred to above comprises a First Polymer that is aqueous dispersible and a Second Polymer that is aqueous insoluble.

### First Polymer

The First Polymer referred to above is aqueous dispersible.

An aqueous dispersible polymer as used herein means that the polymer may be dispersed in an aqueous medium, preferably water.

When preparing the conductive composition according to the present invention, the First Polymer may be added to the composition as an aqueous dispersion or a solid polymer, which is aqueous dispersible.

When applied as a solid polymer, the polymer has water stabilizing polymer segments or monomers. These water stabilizing polymer segments or monomers may be an anionic, cationic, amphoteric or non-ionic. The solid polymer could also be a precursor for a polymer that becomes water dispersible after pH adjustment, for example by converting a carboxylic acid into a carboxylic salt by increasing the pH or converting an amine into an ammonium group by decreasing the pH.

The First Polymer is preferably selected from the group consisting of polyurethanes, polyacrylates, polyacrylamides, polyamines, polyethers, polyesters, polycarbonates, polyvinyl ethers, polyvinyl esters, polyvinyl acetals, polyacetals, polyketones, olefines, polyvinyl halides, polyvinylidene halides, polycarbodiimides, phenolic resins, cellulose derivatives, and polysaccharides, or mixtures thereof.

The First Polymer is more preferably selected from the group consisting of polyurethanes, polyacrylates and polyesters, or mixtures thereof.

Examples of First Polymers which are available as water based dispersions are:
- polyurethane dispersions like Vondic 2210, Vondic 1980 NE, Vondic 1672 NE, Vondic EXP3829, Hydran AP40N, Hydran AP20, Ruco coat EC4811, Hauthane L-2877, Incorez W835/364, NeoRez R9930 and NeoRez R985;
- polyester dispersions like Skybon^{®} EM660, Skybon^{®} EM 110, Eastek^{™} 1100, Eastek^{™} 1400, Vylonal^{®} MD1480, Vylonal^{®} MS1200, Plascoat^{®} Z687 and Plascoat^{®} Z-690;
- polyvinyl acetal dispersions like S LEC^{®} KW-10 and S LEC^{®} KW-M;
- polyacrylate dispersions like Neocryl^{®} XK37, Bonron PS002, Neocryl^{®} XK151, Neocryl^{®} D2101, Joncryl^{®} OH 8312, Joncryl^{®} HSL 9011, Joncryl^{®} HSL700 and Carboset^{®} 514H;
- vinyl ester dispersions like Alcotex^{®} WD100, Vinnapas^{®} EP1 and Sumikaflex S900H L;
- vinyl halide dispersions like Sumikaflex S850 HQ;
- vinylidene chloride dispersions like Daran SL159, Diofan P520 and Daran SL128;
- polycarbodiimide dispersions like Desmodur 2802.

Examples of First Polymers which are available as solid polymers, which are aqueous dispersible are Joncryl^{®} 682, Joncryl^{®} 690, Joncryl^{®} 586, Joncryl^{®} 680, Eudragit^{®} L-100-55, Isobam^{™} 600, Ceramer^{™} 1608, Lithene^{®}ultra PM4-7.5MA, Carboset^{®} 525, Carboset^{®} 527, Carboset^{®} GA1164, Bykjet^{®} 9152, Aquaflex^{™} XL30, SSMA^{®} 1000 HNa, SMA^{®} 1000 MA, SMA^{®} 1550 H, SMA^{®} 1440 F, SMA^{®} 2625 P, SMA^{®} 1000 I, Pluronic^{®} PE 6400.

### Second Polymer

The Second Polymer referred to above is aqueous insoluble.

An aqueous insoluble polymer as used herein means that the solubility of the polymer in an aqueous medium, preferably water, is less than 20 wt%, preferably less than 5 wt % most preferably less than 2 wt%.

The Second Polymer may be aqueous dispersible, however it is preferred that the second polymer is not aqueous dispersible.

The Second Polymer is preferably selected from the group consisting of polyurethanes, polyacrylates, polyacrylamides, polyamines, polyethers, polyesters, polycarbonates, polyvinyl ethers, polyolefines, styrene copolymers, polyvinyl esters, polyvinyl acetals, polyacetals, polyketones, polyvinyl halides, polyvinylidene halides, polycarbodiimides, polysiloxanes, phenolic resins, cellulose derivatives and polysacharrides, or mixtures thereof.

When preparing the Polymer Mixture according to the present invention, the Second Polymer can be used as a solid polymer but also as a solution in an organic solvent, such as ethyl acetate, acetone or MEK.

Examples of the Second Polymer are:
- polyesters like Dynacol^{®} 7150, Vylon^{®} 220, Stepanpol^{®} PD-195, Stepanpol^{®} PD-56, CAPA^{®} polyols such as CAPA^{®} 2205, CAPA^{®} 2402, CAPA^{®} 2054, and CAPA^{®} 3050, Dai Nippon INK & Chemicals polyester polyols, such as OD-X- 2044, OD-X-2692, OD-X-2420, OD-X- 2376, OD-X-355 and OD-X-2018;
- polyketones like Carilon^{®} D26VM100, Ketone Resin 575, Ketone Resin 725, Ketone Resin 730 and Ketone Resin 610;
- polyacrylate resins like Neocryl^{®} B 300, Neocryl^{®} B 805, Neocryl^{®} B 814, Degalan^{®} M920, Elvacite^{®} 2041, Neocryl^{®} B-728;
- polyethers like PolyTHF^{®} grades from BASF;
- polyvinyl acetal resins are Mowital^{®} B 14 S, Pioloform^{®} BL16, Mowital^{®} BA55HH, S LEC^{®} BX 35-Z, S LEC^{®} B5 HPZ, S LEC^{®} BH-6, S LEC^{®} BH-A and S LEC^{®} BH-3;
- cellulose derivatives like Eastman Cellulose Acetate Butyrate (e.g. CAB-381-2, CAB-381-0.1 or CAB-381-0.5);
- polycarbodimides are Stabilizer 7000, Stabilizer G 900 and Stabilizer G 500;
- polycarbonates like Eternacoll^{®} UM90, Eternaoll^{®} PH200D, Eternacoll^{®} UH100 and Eternacoll^{®} UH200.

The second polymer may also be a block or graft copolymer such as the acrylic resin Nanostrength^{®} M22 PE.

Water insoluble polymers available as organic solutions which may be used as Second Polymer are for example phenolic resins from Allnex CK 232, CK 233 and CK 234, which are dissolved in ethylacetate.

The second polymer can also be a reactive polymer, such as isocyanato terminated polymers. Examples of isocyanato terminated polyesters are Ucopol M630, Ucopol M631 and Ucupol 571-01 (all dissolved in ethylacetate), Desmodur^{®} LU D80, Desmodur^{®} LU D95, Polurcast PET85A-01 and Polurcast PET88A-01; examples of isocyanato terminated polycarbonates available as solid resin are Eternathane^{®} 400-7 and Eternathane^{®} 400-12; examples of isocyanato terminated polyethers are Desmodur^{®} XP2617, Desmodur^{®} E 15, Desmodur^{®} LU T80 and Desmodur^{®} LU T95; examples of isocyanato terminated silicones are Silmer^{®} NCO Di-10 and Silmer^{®} NCO Di-50.

Reactive groups may be incorporated in for example an acrylic polymer by using a reactive acrylic monomer such as hydroxyethylacrylate, hydroxy ethyl methacrylate, glycidyl methacrylate, isocyanato ethyl methacrylate, maleic anhydride, etc.

The reactive group in the Second Polymer may result in an improved adhesion, scratch resistance, chemical resistance and mechanical resistance of the aqueous conductive polymer dispersion when coated on a substrate.

### Preparation of the Polymer Mixture

A first preferred method to prepare the Polymer Mixture comprises the steps of:
- providing an aqueous dispersion of the First Polymer,
- adding the Second Polymer solubilized in a low-boiling solvent to the dispersion of the First Polymer thereby forming the Polymer Mixture, and
- removing the low-boiling solvent from the Polymer Mixture.

A Second preferred method to prepare the Polymer Mixture comprises the steps of:
- providing the First Polymer solubilized or dispersed in a first low-boiling solvent,
- adding the Second Polymer solubilized in a second low-boiling solvent to the solution or dispersion of the First Polymer thereby forming the Polymer Mixture, and
- adding water to the Polymer Mixture, and
- removing the first and second low-boiling solvents from the Polymer Mixture.

The first and second low boiling solvents referred to above may the different from each other or may be the same. The first and second low boiling solvents are preferably the same, for example for a better recycling of the organic solvents.

Removal of the low-boiling solvent is preferably carried out by evaporation.

A low-boiling solvent referred to herein may be a water-miscible or water-immiscible solvent. The boiling point of the low-boiling solvent is lower than 100 °C or when the solvent forms an azeotrope with water the azeotrope mixture has a boiling point lower than 100 °C.

Examples of water-miscible low-boiling solvents are ethanol, 2-propanol and acetone.

The low-boiling solvent is preferably a water-immiscible solvent, i.e. having a solubility in water at 20°C of less than 10 vol%.

Examples of water-immiscible low-boiling solvents are ethyl acetate, isopropyl acetate, n-propyl acetate, n-butyl acetate, isobutyl acetate, sec-amyl acetate, n-amyl acetate, sec-amyl acetate, methylene chloride, chloroform, carbon tetrachloride, amyl chloride, cyclohexane, methylcyclohexane, isopropyl ether, diethyl carbonate, methyl isobutyl ketone, diisopropyl ketone, diisobutyl ketone, cyclohexanone, benzene, toluene, xylene, ligroin, nitromethane and mixtures thereof.

Preferred low-boiling solvents are ethyl acetate, methylene chloride, and mixtures of these.

The low boiling solvent is preferably capable of swelling the First Polymer.
When the low boiling solvent is capable of swelling the First Polymer, the Second Polymer may penetrate into the First Polymer and form a homogenous polymer mixture. When the low boiling solvent is not completely swelling the First Polymer or the polymer mobility is restricted a core-shell or so-called "loaded" polymer may be formed.

Depending on the application wherein the conductive polymer dispersion is used, additional ingredients may be added to the conductive polymer dispersion thereby forming a conductive polymer formulation that is optimized for the application. As described in more detail below it may be advantageous for some applications that the dispersion medium of the conductive polymer formulation is largely non-aqueous. In these cases, the Second Polymer may be added as a solution or dispersion in a high-boiling solvent, i.e. a solvent having a Boiling Point above 100 °C, which is water-miscible. Such a high-boiling solvent typically remains in the conductive polymer formulation. Example of such solvents are diethylene glycol, 1,2-dipropylene glycol, glycerol, 1,2-propane diol, 1,3-propanediol or ethylene glycol.

### Conductive polymer

Conductive polymers that may be used are disclosed in for example "Conducting Polymers, Fundamentals and Applications: A Practical Approach" (Prasanna Chandrasekhar); "Conducting Polymers: A New Era in Electrochemistry" (György Inzelt); "Handbook of Organic Conductive Molecules and Polymers: Conductive polymers : synthesis and electrical properties" (Hari Singh Nalwa); "Conjugated Polymers: Theory, Synthesis, Properties, and Characterization" (Terje A. Skotheim, John Reynolds) and "PEDOT: Principles and Applications of an Intrinsically Conductive Polymer" (Andreas Elschner et al.).

Examples of such conductive polymers are polythiophenes, polyanilines, polypyrroles, and polyacetylene.

The conductive polymer according to the present invention is preferably a polymer or copolymer of a substituted or unsubstituted thiophene.

Such a polythiophene typically has a positive charge located on the main chain of the polymer. The positive charge is preferably, at least partially, compensated by an anion.

When the anion is covalently bound to the polymer, the polymer is then often referred to as a self-doped polymer or an intrinsically conductive polymers. The monomers used to make such self-doped polymers, i.e. comprising an anionic group, are also referred to as self-doped monomers.

When the anion is a separate compound, the polymer is then typically referred to as a foreign-doped polymer or an extrinsically conductive polymer. Anions added as separate compounds are preferably polyanions described below.

Preferred foreign-doped polythiophenes are disclosed in EP-A 440957, page 2, line 46 to page 3, line 14.

A particularly preferred extrinsically conductive polymer is a polymer or copolymer represented by Formula I, 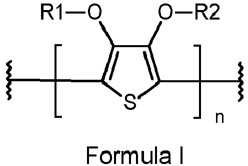 wherein
n is an integer from 2 to 100, preferably from 3 to 50, more preferably from 4 to 25, R1 and R2 independently from each other represent hydrogen, a substituted or unsubstituted C1-C4 alkyl group, or R1 and R2 together form a substituted or unsubstituted C1-C4 alkylene group or a substituted or unsubstituted C3-C10 cycloalkylene group.

More preferably, R1 and R2 independently from each other represent a substituted or unsubstituted methylene group, a substituted or unsubstituted ethylene group, a substituted or unsubstituted 1,3-propylene group or a substituted or unsubstituted 1,2-cyclohexylene group.

A preferred polythiophene is a homopolymer or copolymer of a 3,4-dialkoxy-thiophene of which the two alkoxy groups together form an oxy-alkylene-oxy bridge selected from the group consisting of a substituted or unsubstituted 3,4-methylene-dioxy-thiophene; a substituted or unsubstituted 3,4-ethylenedioxythiophene; a substituted or unsubstituted 3,4-propylene-dioxythiophene; a substituted or unsubstituted 3,4-butylenedioxythiophene; and derivatives thereof.

A particular preferred extrinsically conductive polymer is poly(3,4-ethylenedioxythiophene) (PEDOT).

Preferred intrinsically conductive polythiophenes are homo- or copolymers of a monomer according to the Formula II, 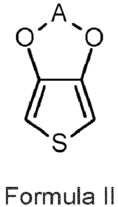 wherein
A represents a substituted or unsubstituted C₁ to C₅ alkylene bridge further functionalized with at least one functional group selected from the group consisting of a sulfonic acid or salt thereof, a phosphonic acid or salt thereof, a phosphate ester or salt thereof, a sulfate ester or salt thereof and a carboxylic acid or salt thereof,

A in Formula II preferably represents a C₂-alkylene bridge.

More preferred intrinsically conductive polythiophenes are homo- or copolymers of a monomer according to the Formula III, 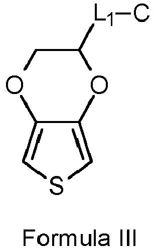 wherein
L₁ represents a divalent linking group comprising 1 to 15 carbon atoms, and
C represents a functional group selected from the group consisting of a sulfonic acid or salt thereof, a phosphonic acid or salt thereof, a phosphate ester or salt thereof, a sulfate ester or salt thereof and a carboxylic acid or salt thereof.

C preferably represents a sulfonic acid or salt thereof.

A particularly preferred intrinsically conductive polymer is a thiophene homo- or copolymer including a monomeric unit according to the Formula IV, 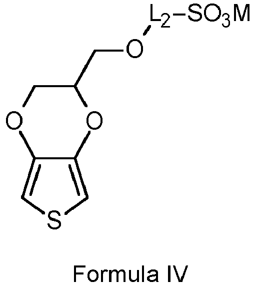 wherein
L₂ represents a divalent linking group comprising no more than 10 carbon atoms,
M represents a hydrogen or a counterion to compensate the negative charge of the sulfonate group.

The conductive composition according to the present invention may comprise both an intrinsically and extrinsically conductive polythiophene described above.

### Preparation of the conductive polymer

The polythiophene conductive polymer is preferably prepared by oxidative polymerization of the thiophene monomers described above. More preferably, the conductive polymer is prepared by oxidative polymerization of the thiophene monomers described above in an aqueous medium.

In case of extrinsically conductive polythiophenes, the oxidative polymerization is preferably carried out in the presence of a polyanion described below.

The concentration of the thiophene monomer in the aqueous phase medium is preferably in a range from 0.1 to 25 wt%, preferably in a range from 0.5 to 10 wt%, all relative to the total weight of the aqueous reaction medium.

Suitable oxidizing agents are iron(III) salts, such as FeCl₃, and iron(III) salts of aromatic and aliphatic sulfonic acids; H₂O2; K₂Cr₂O₇; KMnO₄, alkali metal perborates; alkali metal or ammonium persulfates; and mixtures thereof.

Further suitable oxidants are described, for example, in Handbook of Conducting Polymers (Ed. Skotheim, T. A., Marcel Dekker: New York, 1986, Vol. 1, pages 46-57).

Particularly preferred oxidizing agents are salts of a peroxydisulfate, in particular K₂S₂O₈, Na₂S₂O₈; iron(III) salts, in particular iron(III) chloride; or a combination thereof.

A mixture of salts of a peroxydisulfate and at least one further compound that catalyzes the cleavage of the peroxydisulfate, such as an Fe(lll) salt, is particular preferred.

According to a particularly preferred embodiment the oxidizing agent is a mixture of Fe₂(SO₄)₃ and Na₂S₂O₈.

There are different ways for preparing the aqueous reaction medium. The thiophene monomer can be dissolved or dispersed in the aqueous reaction medium followed by the addition of the oxidizing agent(s), which can also be dissolved or dispersed in an aqueous phase, or the oxidizing agent(s) is/are first dissolved or dispersed in the aqueous reaction medium, followed by the addition of the thiophene monomer, which can also be dissolved or dispersed in an aqueous phase.

If more than one oxidizing agent is used, for example a mixture of Fe₂(SO₄)₃ and Na₂S₂O₈, it is furthermore possible to first mix one of these components with the thiophene monomer in the aqueous reaction medium followed by the addition of the second oxidizing agent.

The oxidative polymerization is preferably carried out under an inert atmosphere as disclosed in EP-11453877 (Agfa Gevaert). The oxygen content of the reaction medium when the oxidizing agent, for example a salt of peroxydisulfate, is added to it is preferably less than 3 mg per liter, more preferably less than 1.5 mg/liter, most preferably less than 0.5 mg/liter.

The concentration of oxygen in the reaction medium can be regulated by any means, such as freeze-thaw techniques, prolonged bubbling of an inert gas such as Argon, Nitrogen or Helium through the reaction medium, consumption of oxygen in a sacrificial reaction under an inert gas blanket. An inert gas is preferably bubbled through the reaction medium until the polymerization is completed thereby maintaining the oxygen concentration below 3 mg/l.

The oxidative polymerization is preferably carried out at low pH, as disclosed in EP-A 1384739 (Heraeus). The pH is preferably 1.5 or less, more preferably 1.00 or less.

To adjust the pH, an acid may be used, preferably selected from the group of water-soluble inorganic acids and water-soluble organic acids. Examples of inorganic acids are hydrochloric acid, sulfuric acid, nitric acid and phosphoric acid. Examples of organic acids include p-toluenesulfonic acid, benzenesulfonic acid, methanesulfonic acid and trifluoromethanesulfonic acid.

The temperature of the reaction mixture is preferably between 0 to 100 °C, more preferably between 0 to 50 °C, most preferably between 5 and 30 °C.

The amount of thiophene monomers and polyanions in the reaction mixture are chosen so that stable polythiophene/polyanion dispersions are obtained of which the solid content is preferably from 0.05 to 25 wt%, more preferably from 0.1 to 10 wt%, most preferably from 0.8 to 2 wt%.

After the polymerization reaction is completed the liquid composition may be further purified, for example by means of filtration, in particular by means of ultrafiltration, and/or by a treatment with ion exchanger, in particular by a treatment with an anion exchanger and a cation exchanger.

After the purification step, the conductive polymer dispersion may be further optimized for the application wherein it will be used. For example, when used for preparing an antistatic layer, a liquid formulation described below may be prepared from the conductive polymer dispersion.

Various homogenization techniques may be used during the preparation of the conductive polymer. The homogenizing techniques may be selected from:
- ultrasonic homogenization techniques;
- pressure homogenization techniques; and
- mechanical homogenization techniques.

Preferred mechanical homogenizers are rotor-stator homogenizers and blade type homogenizers. Another mechanical homogenization technique may be the use of a spinning disk reactor.

Preferred high-pressure homogenizers, such as for example a Gaulin homogenizer or an Ariete homogenizer, force the dispersion through a very narrow channel or orifice under pressure. Another preferred high-pressure homogenizer is a microfluidizer.

Two or more homogenizers may be used in combination, preferably in a consecutive way.

The homogenization techniques may be used before, during and after the polymerization reaction. These homogenization techniques may also be used during the preparation of the liquid formulation described below.

### Polyanion

In case the conductive polymer is an extrinsically conductive polythiophene, the conductive polymer disperions preferably comprises a polyanion. The polyanion is preferably a polymeric polyanion.

The conductive polymer dispersion comprises a polymeric polyanion wherein at least 75 mol%, more preferably at least 80 mol%, more preferably at least 90 mol%, most preferably at least 99 mol %, of the monomeric units of the polyanion comprise a substituent selected from the group consisting of a sulfonic acid or salt thereof, a phosphonic acid or salt thereof, a phosphate ester or salt thereof, a sulfate ester or salt thereof and a carboxylic acid or salt thereof.

The functional group is preferably a sulfonic acid or salt thereof.

The polymeric polyanion may be a copolymer of different monomers but is preferably a homopolymer.

In a particularly preferred embodiment the polymeric polyanion is styrene based.

According to a particular preferred embodiment, the polyanion is poly(4-styrenesulfonic acid) or a salt thereof.

These polyacids or their alkali salts are commercially available and can be prepared according to the known methods, e.g. as described in Houben-Weyl, Methoden der Organische Chemie, Bd. E20 Makromolekulare Stoffe, Teil 2, (1987), pp. 1141.

The weight average molecular weight (Mw) of the polymeric anion is not particularly limited but is preferably from 1 000 to 1 000 000 Da, more preferably from 50 000 to 500 000 Da and most preferably from 100 000 to 300 000 Da.

The conductive polymer and the polyanion together typically form particles. The median particle size (d₅₀) of the polythiophene/polyanion particles is preferably from 1 to 100 nm, more preferably from 2 to 75 nm, most preferably from 5 to 50 nm, particularly preferred from 10 to 40 nm. The d₅₀ particle size is preferably measured by centrifugal liquid sedimentation particle size analysis.

### Conductive Polymer Formulation

Depending on the application wherein the conductive polymer dispersion is used, additional ingredients may be added to the conductive polymer dispersion thereby forming a conductive polymer formulation that is optimized for the application.

All or part of the additional ingredients described below may also be added to the conductive polymer dispersion referred to above.

These additional ingredients include, for example, surface-active substances, adhesion promoters, crosslinking agents, additional binders, conductivity increasing compounds, heat-and moisture-stability improving compounds, acidic compounds or alkaline compounds.

The surface-active compounds may be:
- anionic surfactants such as alkylbenzenesulphonic acids and salts, paraffin sulphonates, alcohol sulphonates, ether sulphonates, sulphosuccinates, phosphate esters, alkyl ether carboxylic acids or carboxylates;
- cationic surfactants such as quaternary alkylammonium salts;
- nonionic surfactants such as linear alcohol ethoxylates, oxo alcohol ethoxylates, alkylphenol ethoxylates or alkyl polyglucosides; and
- zwitterionic surfactants such as compounds comprising both a carboxylic acid group and a quaternary ammonium group, for example lauryl-N,N -(dimethyl-ammonio)-butyrate and lauryl-N,N-(dimethyl)-glycinebetaine; compounds comprising both a sulfuric acid group and quaternary ammonium group, for example 3-[(3-cholamido-propyl)dimethylammonio]-1-propane-sulfonate, 3-(4-tert-butyl-1-pyridinio)-1-propanesulfonate, 3-(1-pyridinio)-1-propanesulfonate and 3-(benzyl-dimethyl-ammonio)propanesulfonate; compounds comprising both a phosphoric acid group and a quaternary ammonium group, for example with hexadecyl phosphocholine; compounds comprising a quaternary ammonium group with an attached hydroxy group, for example lauryldimethylamine N-oxide; and phospholipids, which consist of a quaternary ammonium head coupled *via* a phosphate group and glycerol to two hydrophobic fatty acids.

Particularly preferred surfactants are the commercially available surfactants available under the trademarks Dynol^{®} and Zonyl^{®}.

Preferred adhesion promoters are organofunctional silanes or hydrolysates thereof such as 3-glycidoxypropyltrialkoxysilane, 3-amino-propyl-triethoxysilane, 3-mercaptopropyltrimethoxysilane, 3-methacryloxypropyl-trimethoxysilane, vinyltrimethoxysilane or octyltriethoxysilane.

Preferred crosslinking agents are selected from the group consisting of melamine compounds, epoxysilanes, hydrolysis products of silanes and blocked isocyanates. A preferred epoxysilane is 3-glycidoxy-propyltrialkoxyilane; preferred hydrolysis products of silanes are those disclosed in EP-A 564911 (AGFA GEVAERT NV), such as the hydrolysis products of tetraethoxysilane or tetramethoxysilane.

Preferred conductivity increasing compounds are:
- compounds containing ether groups such as e.g. tetrahydrofuran;
- compounds containing lactone groups such as γ-butyrolactone or γ-valero-lactone;
- compounds containing amide or lactam groups such as caprolactam, N-methylcaprolactam, N,N-dimethylacetamide, N-methylacetamide, formamide, N,N-dimethylformamide (DMF), N-methyl-formamide, N-methyl-formanilide, N-methyl-2-pyrrolidone (NMP), N-octyl-pyrrolidone, 2-pyrrolidone, N-butyl-pyrrolidone, and N-hydroxyethyl-pyrrolidon;
- sulphones and sulphoxides such as sulpholane (tetramethylene sulphone) or dimethylsulphoxide (DMSO);
- sugar or sugar derivatives such as arabinose, saccharose, glucose, fructose or lactose;
- di- or polyalcohols such as sorbitol, xylitol, mannitol, mannose, galactose, sorbose, gluconic acid or ethylene glycol, di- or tri(ethylene glycol), 1,1,1-trimethylol-propane, 1,3-propanediol, 1-,2-propane-diol, 1,5-pentanediol, 1,2,3-propanetriol, 1,2,4-butanetriol or 1,2,6-hexanetriol, aromatic di- or polyalcohols such as resorcinol. Particularly preferred conductivity increasing compounds are selected from the groups consisting of N-methyl-pyrrolidinone, N-butyl-pyrrolidone, N-hydroxyethyl-pyrrolidone, DMSO, ethylene glycol and diethylene glycol.

Preferred heat-and moisture-stability improving compounds are aromatic compounds comprising at least two hydroxygroups as disclosed in WO2008/055834 (AGFA GEVAERT NV), page 10, line 15 to page 11, line 10. Particularly preferred compounds are selected from the group consisting of pyrogallol, gallic acid esters and polyhydroxy-benzoic acids.

To adjust the pH bases or acids as described in WO2010/003874 on page 4, lines 13-32 are preferably used. These compounds do not impair the film formation of the polymer capacitor formulation and are not volatile at higher temperatures such as soldering temperatures. Preferred compounds are the bases 2-dimethylaminoethanol, 2,2'-iminodiethanol or 2,2',2"-nitrilotriethanol and the acid polystyrenesulphonic acid.

For some applications it may be advantageous that the dispersion medium of the conductive polymer formulation is largely non-aqueous, for example to improve its surface wettability or to improve the drying properties of coatings/prints prepared from the formulation. Instead of simply diluting the conductive polymer dispersion with organic solvents, which results in low wt% concentrations of conductive polymer, it is often preferred to remove at least part of the water after adding an organic solvent to the conductive polymer composition as disclosed in for example EP-A 1453878 (AGFA GEVEAERT NV). The water is typically removed by evaporation. The water content is preferably reduced by at least 65 wt%. The organic solvents used to prepare such formulations are preferably selected from the group consisting of 1,2-propandiol, propylene glycol, diethylene glycol, N-methyl pyrrolidone and carbitol acetate.

The conductive polymer dispersion or formulation according to the present invention may be applied on a substrate by any suitable method, such as for example coating, printing, jetting or spraying.

The aqueous conductive dispersion according to the present invention is preferably used as a conductive printing ink, such as for example a conductive screen-printing ink, a gravure printing ink, a conductive flexographic printing ink, an inkjet printing ink or an offset printing ink. The conductive polymer formulation according to the present invention is most preferably used as a screen printing ink.

The suitability of the aqueous conductive dispersion for a particular printing process is substantially determined by the viscosity of the formulation.

The viscosity of a gravure and flexographic printing ink, while being printed, is around 15 mPa.s.

The viscosity of a screen printing ink depends on the screen mesh used and the printing speed. Typical viscosities while being printed are between 0.5 and 5 Pa.s for rapid processing (shear rate = ca. 100 s⁻¹) and 8 to 50 Pa.s for slow processing (shear rate = ca. 1 s⁻¹) and 50 to 800 Pa.s at rest (shear rate = ca. 10⁻² s⁻¹).

Inkjet inks typically have viscosities under printing conditions from 2 to 20 mPa.s.

The adjustment of the viscosity can, for example, be accomplished by adding appropriate rheology modifiers as a further additive.

The solid content of the conductive polymer formulation is preferably from 0.01 to 20 wt%, more preferably from 0.1 to 15 wt%, most preferably from 0.25 to 10 wt%, in each case based on the total weight of the formulation.

### Applications

The aqueous conductive dispersion according to the present invention is preferably used in a conductive printing ink, more preferably in a conductive screen printing ink.

The screen printing ink is preferably used in white goods applications, automotive, energy providing, medical applications etc.

The screen printing ink may be applied on flexible and rigid substrates such as PolyEthyleneTerephthalate (PET), Polycarbonate (PC), PolyMethylMethacrylate (PMMA), Polylmide (PI) and glass.

The screen printing ink may be used to manufacture electrodes for electroluminescent lamps, transparent heating elements, capacitive touch sensors, membrane switches, fingerprint sensors, conductive biocompatible layers, medical sensors, printed displays including signs, labels, indicators, or energy level matching layers.

### EXAMPLES

### Materials

All materials used in the following examples were readily available from standard sources such as ALDRICH CHEMICAL Co. (Belgium) and ACROS (Belgium) unless otherwise specified. The water used was deionized water.

**Carbopol Aqua 30** is an acrylate/acrylic acid copolymer emulsion in water, commercially available from Lubrizol.

**Dynacoll 7150** is a polyester, commercially available from Evonik.

**EDOT** is 3,4-ethylenedioxythiophene, commercially available from Heraeus.

**Lewatit^{®} MonoPlus M600** is a basic, gelular anion exchange resin, commercially available from Lanxess AG.

**Lewatit^{®} MonoPlus S 108 H** is an acidic, gelular cation exchange resin, commercially available from Lanxess AG.

PSS is an aqueous solution of polystyrenesulfonic acid having a Mw of 300 kDa, prepared according to a method disclosed in Houben-Weyl, Methoden der organischen Chemie, Vol. E 20, Makromolekulaire Stoffe, Teil 2 (1987), page 1141).

**Silwet L-7607** is an silicone/poly(ethylene oxide) copolymer, commercially available from Momentive Performance Materials.

**Vondic 1980NE** and **Vondic 2220** are polyurethane resins dispersed in water, both commercially available from Sun Chemical.

**MELINEX^{®} ST507** (125 µm) is a polyester substrate commercially available from DuPont-Teijin.

**PET rough** (175 µm) is an internally prepared polyester substrate without a primer.

### Methods

### Surface resistance measurement

The surface resistance SER was measured at room temperature using a two point probe method.

### Adhesion measurement

The adhesion of the screen printed films on different substrates was determined with a Cross Hatch Cutter Elcometer 1542 according to ISO 2409:2020. Tesa 4104 tape (25 mm) was used. The result of the measurement is a score of 0 to 5, correlating with a high (0) or low adhesion (5).

### Screen printing

The PEDOT/PSS-screen printing ink was printed on a substrate using a flatbed screen printer with a polyester screen P77/55 with 77 wires/cm of 55 µm diameter, provided with an Ulano Vision 35 capillary film with an EOM of 14 µm. A floodbar is used at an angle of 110°. A squeegee with a hardness of 80 shore is used at an angle of 80° and a speed of 300 mm/s. After printing, the ink was dried in a conveyor belt dryer with hot air at 130°C for 3 minutes.

### Example 1: Preparation of PEDOT/PSS

73.3 g of PSS, deionized water (325 mL), and nitric acid (4.3 g, 48.3 mmol) were mixed in a reaction vessel. Iron(III) sulfate (0.16 g, 0.39 mmol) and sodium persulfate (3.16 g, 13.3 mmol) were added. The reaction mixture was stirred and cooled to 5°C under nitrogen flow. The oxygen level was below 30 ppb.

EDOT (1.71 g, 12.1 mmol) was added to the reaction mixture and stirred for 20 hours at 5°C.

The reaction mixture was then treated with ion exchanger (110 g Lewatit ^{®} MonoPlus M600 + 60 g Lewatit ^{®} MonoPlus S 108 H, filtered and washed 2× 50 mL water, repeated). The resulting viscous mixture was treated with high shear homogenization (Lab Gaulin, 4× 600 bar).

After a concentration step in vacuo a 1.12 wt% blue dispersion of PEDOT/PSS-1 (a) in water was obtained.

### Example 2: Preparation of PEDOT/PSS base formulation

PEDOT/PSS (47,98 g) obtained in Example 1, 1,2-dipropyleneglycol (69.12 g) and diethyleneglycol (6.98 g) were added to a reaction vessel and stirred. Then, water was removed from the mixture under vacuum at 48 °C until the water content was below 8 wt%.

After cooling the reaction mixture to room temperature, (3-glycidyloxypropyl)-trimethoxysilane (0.208 g), Silwet L-7607 (0.184 g) and Carbopol Aqua 30 (2.58 g) were added and the mixture was stirred.

### Example 3: Preparation of Inventive Screen Inks

### Preparation of INV-01

1 g of Dynacoll 7150 is dissolved in ethyl acetate (3 g) and added to Vondic 1980NE (6.59 g) in a reaction vessel. The mixture is dispersed with a Disperlux homogenizer at 3000 rpm. Then, deionized water is added (3 g) and the ethyl acetate is removed by rotary evaporation. The obtained dispersion is diluted to a concentration of 40 wt%. PEDOT/PSS base formulation (3.9712 g) of Example 2 is treated with high shear homogenization (Lab Gaulin, 3× 600 bar). Then, the Vondic 1980NE/Dynacoll 7150 dispersion (0.288 g) is added while stirring at 2500 rpm. Dihydroxybenzoic acid (0.288 g) is added. After stirring for 30 min. the formulation is neutralized to a pH of 2.61 with *N*,*N*-dimethylethylamine.

### Preparation of INV-02

An experiment was carried out in the same manner as described for Example 1 except for using 4.4 g of Vondic 1980NE. The formulation was neutralized to a pH of 2.71.

### Example 4: Preparation Comparative Screen Inks

### Preparation of COMP-01

PEDOT/PSS base formulation obtained in Production Example 2 is added to a vessel and stirred. Vondic 1980NE (0.576 g) is added and dispersed with a Disperlux homogenizer for 30 min. 12.8 g of the obtained mixture is further treated with high shear homogenization (Lab Gaulin, 3× 600 bar). Dihydroxybenzoic acid (0.0922 g) was added. After stirring for 30 min. the formulation is neutralized to a pH of 2.78 with *N*,*N*-dimethylethylamine.

### Preparation of COMP-02

An experiment was carried out in the same manner as described for Comparative Example 2 except for using 0.0576 g of Vondic 2200 instead of Vondic 1980NE. The formulation was neutralized to a pH of 2.50.

### Example 3

The SER and adhesion, measured as described above, of screen-printed films of the inventive and comparative screen inks mentioned above on different substrates are shown in Table 1.

**Table 1**

| | **Substrate** | **SER (ohm/sq.)** | **Adhesion** |
|---|---|---|---|
| INV-01 | PET rough | 2.4 E+2 | 0 |
| INV-01 | MELINEX ST507 | 2.4 E+2 | 2 |
| INV-02 | PET rough | 2.4 E+2 | 1 |
| INV-02 | MELINEX ST507 | 2.5 E+2 | 0 |
| COMP-01 | PET rough | 2.1 E+2 | 4 |
| COMP-02 | PET rough | 2.3 E+2 | 0 |
| COMP-02 | MELINEX ST507 | 2.3 E+2 | 0 |

It is clear from the results of Table 1 that the adhesion of screen printed inks comprising a Polymer Mixture according to the present invention as binder (INV-01 and INV-02) is better compared to the adhesion of a screen printed ink comprising a different type of polymer binder without NMP (COMP-01) and comparable to the adhesion of a screen printed ink comprising a different type polymer binder containing NMP (COMP-02).

## Claims

1. A conductive polymer composition comprising:
- a conductive polymer, and
- a polymer binder,
**characterized in that** the polymer binder includes an aqueous dispersion of a Polymer Mixture comprising a First Polymer that is aqueous dispersible and a Second Polymer that is aqueous insoluble.

2. The conductive polymer composition according to claim 1 wherein the aqueous insoluble polymer is aqueous dispersible or non-dispersible.

3. The conductive polymer composition according to claim 1 or 2 wherein the First Polymer and Second Polymer is selected from the group consisting of polyurethanes, polyesters and polyacrylates.

4. The conductive polymer composition according to any of the preceding claims wherein the First Polymer is a polyurethane and the Second Polymer is a polyester.

5. The conductive polymer composition according to any of the preceding claims wherein the conductive polymer is a polythiophene.

6. The conductive polymer composition according to any of the preceding claims further containing a polyanion.

7. The conductive polymer composition according to claim 6 wherein the polythiophene and the polyanion are present as polythiophene/polyanion particles having a median particle size (d₅₀) from 5 to 40 nm, measured by centrifugal liquid sedimentation particle size analysis.

8. The conductive polymer composition according to claim 6 or 7 wherein the polyanion is polystyrene sulfonic acid or a salt thereof.

9. The conductive polymer composition according to any of the claims 6 to 8 wherein the weight average molecular weight (Mw) of the polyanion is from 50 to 500 kDa.

10. A conductive polymer formulation including a conductive polymer composition as defined in any of the preceding claims.

11. The conductive polymer formulation according to claim 10 further comprising a conductivity increasing compounds selected from the groups consisting of N-methyl-pyrrolidinone, N-butyl-pyrrolidone, N-hydroxyethyl-pyrrolidone, DMSO, ethylene glycol and diethylene glycol.

12. The conductive polymer formulation according to claim 10 or 11 further comprising a cross-linking agent selected from the group consisting of epoxysilanes, hydrolysis products of silanes, and blocked isocyanates.

13. The use of the conductive polymer formulation according to any of the claims 10 to 12 as a conductive screen printing ink.

14. The use of the conductive polymer composition according to any of the claims 1 to 9 or the conductive polymer formulation according to any of the claims 11 to 12 for the preparation of a conductive layer in an electronic device.

15. The use according to claim 14 wherein the electronic device is selected from photoconductive cells, photoresistors, photoswitches, phototransistors, phototubes, IR detectors, photovoltaic device, solar cells, coating materials for memory storage devices, field effect resistance devices, anti-static films, biosensors, electrochromic devices, solid electrolyte capacitors, hybrid capacitors, super capacitors, energy storage devices, batteries and electromagnetic shielding.
